# EUROPEAN PATENT APPLICATION

(11) **EP 3 104 303 A1**
(43) Date of publication of application: **14.12.2016**
(21) Application number: 15171626.3
(22) Date of filing: 11.06.2015
(51) Int. Cl.: G06K 9/00

(54) **SIGNAGE DETECTION ON THE GROUND USING SURROUND VIEW CAMERAS**

(71) Applicant: Conti Temic Microelectronic GmbH, 90411 Nürnberg (DE); Continental Automotive GmbH, 30165 Hannover (DE)
(72) Inventor: Fey, Wolfgang, 88131 Bodolz (DE); Guerreiro, Rui, Brighton, BN1 5PP (GB); Riley, Tom, Haywards Heath, RH16 3HU (GB)

(57) **Abstract**

The application provides a method of detecting road signs for a vehicle with a plurality of cameras. The method comprises a step of the cameras capturing front, rear, and sides images with a perspective view of an area that surrounds the vehicle. These images with the perspective view are then transformed into images with a top down view. Road signs are later detected from the images with the top down view. The road signs information is afterward transmitted out.

## Description

The present application relates to detection of road signs.

A digital camera has an optical lens and an image sensor, which includes a plurality of pixel sensors. The optical lens is used for receiving light rays from an object that is placed in front of the camera. The optical lens allows the light rays to pass through the optical lens, for travelling to the image sensor.

US 8212878 B2 discloses an on-vehicle camera calibration apparatus includes an on-vehicle camera and a camera parameter calculation unit. In use, the camera parameter calculation unit is configured to calculate camera parameters and to output the camera parameters. In detail, the calculation unit calculates the camera parameters according to a characteristic amount of a road surface sign that is photographed by the on-vehicle camera and is recognized by an image processing.

US 8660311 B2 relates generally to the field of automated object recognition. More specifically, US 8660311 B2 relates to a system for classifying different types of sheeting materials of road signs depicted in a video-stream.

It is an object of this application to provide an improved device for detecting road signs.

The application provides a ground signage detection module for a vehicle.

The vehicle is used for transporting people or goods.

The ground signage refers to signs, which are provided on the road. The road signs are often related to vehicle traffic information, such as vehicle speed limit. Examples of the road signs include road line marks, traffic directional arrows, and speed limit signage. These road signs are oriented horizontally and are thus different vertical signs, which are attached to structures, such as vertical poles.

The detection module comprises a camera module, an image evaluation system, and a display unit.

The camera module includes two or more cameras. The cameras are intended for directing or pointing at an area on the front, at an area on the left side, at an area on the right side, and at an area on the rear of the vehicle.

Each of the cameras can be placed at different positions with different orientations or directions. As an example, the camera can be located in the front of the vehicle while it is directed at the front of the vehicle. The camera can also be located in the front of the vehicle while it is directed at the left side of the vehicle.

Referring to the camera, it is used for taking an image of an area that is placed in front of the camera. This image provides a perspective view of the area, wherein the plane of the image is not parallel to the vertical plane or to the horizontal plane.

The image evaluation system is provided for generating a top-down view image from the above-mentioned perspective view images.

The top-down view provided a view of an area as seen vertically above the area. In other words, the top-down view provides an area view of a bird, wherein the bird is positioned vertically above the area and is positioned at a pre-determined height above the area.

The image evaluation system also detects or extracts at least one road sign from the top-down view image.

The display unit shows information of the extracted road sign to a driver of the vehicle.

The detection module provides several advantages.

The top-down view shows road signs with less distortion for easier extraction or detection of these road signs. In contrast, the perspective view shows road signs with some distortion, thereby making detection of these road signs difficult or more complex.

The cameras are directed to the front, the rear and to the sides of the vehicle. When connected to an Advanced Driver Assistance System (ADAS), the detection module provides information, which relate to all sides of the vehicle, to the ADAS, thereby providing the ADAS with a complete view of the vehicle. This is different from other camera module that is directed only to the front of the vehicle. Such a camera detection module limits the performance of the ADAS.

The camera detection module can observe these areas, which are placed at various sides, and not just the front side, of vehicles, before the vehicle takes a certain action, such as reversing. The observation can detect road curbs and parking lot lines and they provide the vehicle driver with useful and relevant information.

The cameras, which often have wide-angle views, enable processing of the immediate vehicle areas, including areas that are not visible to the vehicle driver, thereby providing information of these hidden areas to the driver. Examples of these areas include road curbs, parking lot lines, and start lines at a traffic junction.

The cameras can include different cameras being directed at different areas of the vehicle.

In detail, the cameras can include one or more front cameras being directed at an area on the front of the vehicle. Similarly, the cameras can also comprise one or more left side cameras being directed at an area on the left side of the vehicle. The cameras can also include one or more right side cameras being directed at an area on the right side of the vehicle. The cameras can also comprise one or more rear cameras being directed at an area on the rear of the vehicle.

The cameras can also be positioned on diagonal edges of the vehicle.

In one aspect of the application, the image evaluation system is further adapted for rendering the top down view image in high resolution. This allows for easier detection of the road signs.

In other words, the cameras provide images with many pixels. This then provides a high quality image view of the road that is front of the vehicle, which consequently enables reliable detections of signage.

The application also provides a vehicle with the above ground signage detection module.

The application also provides a method of operating a vehicle with a plurality of cameras.

The method includes a step of providing at least one front camera, at least one left side camera, at least one right side camera, and at least one rear camera.

The cameras then capture perspective view images of a front area, a rear area, a right side area, and of at least one left side area of the vehicle.

A processor then transforms these perspective view images into one or more corresponding top down view images.

The processor then detects at least one road sign from the transformed top down view images.

After this, the processor outputs information regarding the at least one road sign to a display unit for viewing by a driver of the vehicle.

The method can include a step of rendering the top down view image in high resolution for improving reliability of detection of road signs.

The method often includes a step of using the information regarding the road sign for navigation.

In short, the application comprises a method of operating a surround view camera module to detect road signs or signage.

Examples of the road signs include road line marks, traffic directional arrows, and speed limit signage. The signage is placed essentially in a horizontal plane that is provided on the ground.

The camera module includes a plurality of wide angle cameras, which are installed in a vehicle. The cameras are directed to the front, rear, left and the right sides of the vehicle.

The method comprises a step of the wide angle cameras capturing digital images of a perspective view a scene that surrounds the vehicle. In particular, the scene includes areas that placed in the front, the rear, the left and the right sides of the vehicle, wherein these areas are also located near the vehicle. The scene also includes a relatively long or large area that extends from the front of the vehicle towards a horizon that is located in front of the vehicle.

The wide-angle cameras then send data of the images of the perspective view of the scene to a processor.

The processor then transforms the image with a perspective view of the scene into an image with a top-down view of the scene. The top-down view is also called a map view.

The top-down view is different from the perspective view. Signs on the road with the perspective view have a perspective distortion and thus cannot be detected easily by software.

The processor can also render the image data with many pixels, thus allowing the image data to provide a high quality image of the scene.

The processor then detects signage from the image data with a top-down view of the scene. In a general sense, the processor is also capable of detecting vertical signage that is usually attached to structures, such as vertical poles.
- Fig. 1: illustrates a vehicle with a surround view module for taking images of signs on a road,
- Fig. 2: illustrates a perspective view of an image of a camera of the surround view module of Fig. 1,
- Fig. 3: illustrates a top view of the image of Fig. 2, and
- Fig. 4: illustrates a flow chart of a method of using the surround view module of Fig. 1.

In the following description, details are provided to describe embodiments of the application. It shall be apparent to one skilled in the art, however, that the embodiments may be practiced without such details.

Some parts of the embodiments have similar parts. The similar parts may have the same names or similar part numbers. The description of one similar part also applies by reference to another similar parts, where appropriate, thereby reducing repetition of text without limiting the disclosure.

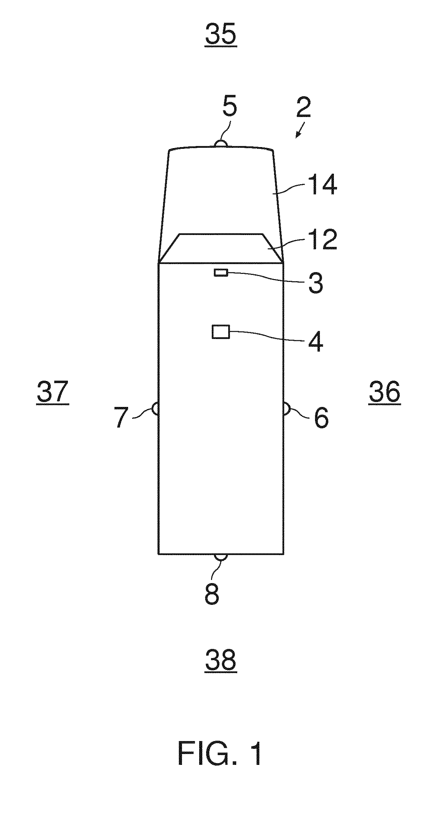

Fig. 1 shows a vehicle 1 with a surround view module 2.

The surround view module 2 includes four cameras, a display unit 3, and a processor 4. The cameras and the display unit 3 are connected electrically to the processor 4.

The cameras include a front camera 5, a driver side camera 6, a passenger side camera 7, and a rear camera 8.

The vehicle 1 has a front side 35 and a rear side 38, which is opposite to the front side 35. The vehicle 1 also has a driver side 36 and a passenger side 37, which is opposite to the driver side 36.

The surround view module 2 is attached to the vehicle 1 such that the front camera 5 is positioned at the front side 35 and the rear camera 8 is positioned at the rear side 38 of the vehicle 1. Furthermore, the driver side camera 6 is positioned at the driver side 36 and the passenger side camera 7 is positioned at the passenger side 37 of the vehicle 1.

Referring to the display unit 3, it is installed in a dashboard 12 of the vehicle 1.

In use, the vehicle 1 is located on the ground of an area. The vehicle 1 is used for transporting people or goods.

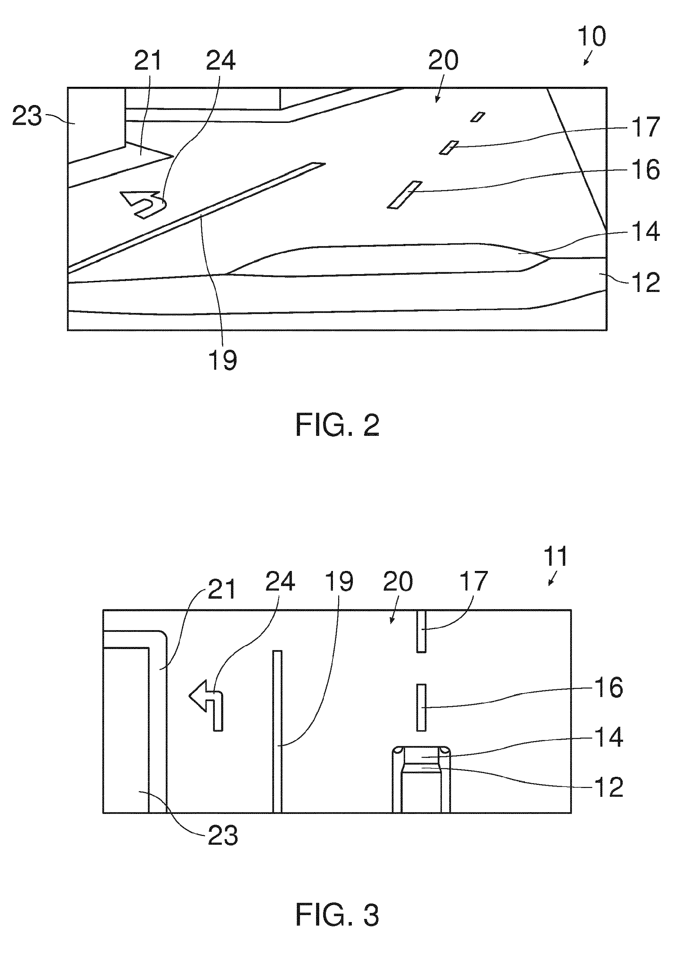

The surround view module 2 is used for detecting road signs 16, 17, 19, and 24, as illustrated in Fig. 2.

The road signs 16, 17, 19, and 24 are provided on roads of the ground. The road signs 16, 17, 19, and 24 are oriented horizontal and they 16, 17, 19, and 24 are often painted on a road 20 for providing directions or instructions to a driver of the vehicle 1.

These horizontal road signs 16, 17, 19, and 24 are different from vertical signage, which are often attached to structures, such as metal poles.

Fig. 2 shows a perspective view of an image 10 of the front camera 5 that is attached to the vehicle 1.

Each of the cameras 5, 6, 7, and 8 takes an image of a region, which is located in front of the respective camera 5, 6, 7, or 8.

The image 10 shows a perspective view of the region. The perspective view shows a view of the region, wherein the plane of the image 10 is not parallel to the vertical plane or to the horizontal plane.

The front camera 5 is also directed such that it takes an image of a region, which is positioned at the front side 35 of the vehicle 1.

Similarly, the rear camera 8 is directed such that it takes an image of a region, which is positioned at the rear side 38 of the vehicle 1.

The driver side camera 6 is directed such that it takes an image of a region, which is positioned at the driver side 36 of the vehicle 1.

The passenger side camera 7 is directed such that it takes an image of a region, which is positioned at the passenger side 37 of the vehicle 1.

The cameras 5, 6, 7, and 8 also directed such that images taken by these cameras 5, 6, 7, and 8 form a 360 degree perspective view, or a complete surrounding perspective view of the area on which the vehicle 1 is placed.

Each camera 5, 6, 7, or 8 also sends the respective image with the perspective view to the processor 4.

The processor 4 serves to transforms the received image 10 with the perspective view of the area into an image 11 with a corresponding top-down view of the area, which is illustrated in Fig. 3.

The top-down view is also called a bird's eye view. The bird's eye view refers to is an area view of a bird, wherein the bird is positioned vertically above the area and is positioned at a pre-determined height above the area.

The processor 4 also renders these images with the complete surrounding top down area views in high resolution for easier later identification of objects in the images. In short words, the processor 4 renders these images with many pixels.

The processor 4 is also equipped with pictogram classifiers, wherein these classifiers extract or detect horizontal road signage 16, 17, 19, and 24 from these images with the complete surrounding top-down views of the area.

The processor 4 then sends information regarding the extracted road signs 16, 17, 19, and 24 to the display unit 3.

The display unit 3 shows the extracted road signs 16, 17, 19, and 24 to a driver of the vehicle 1.

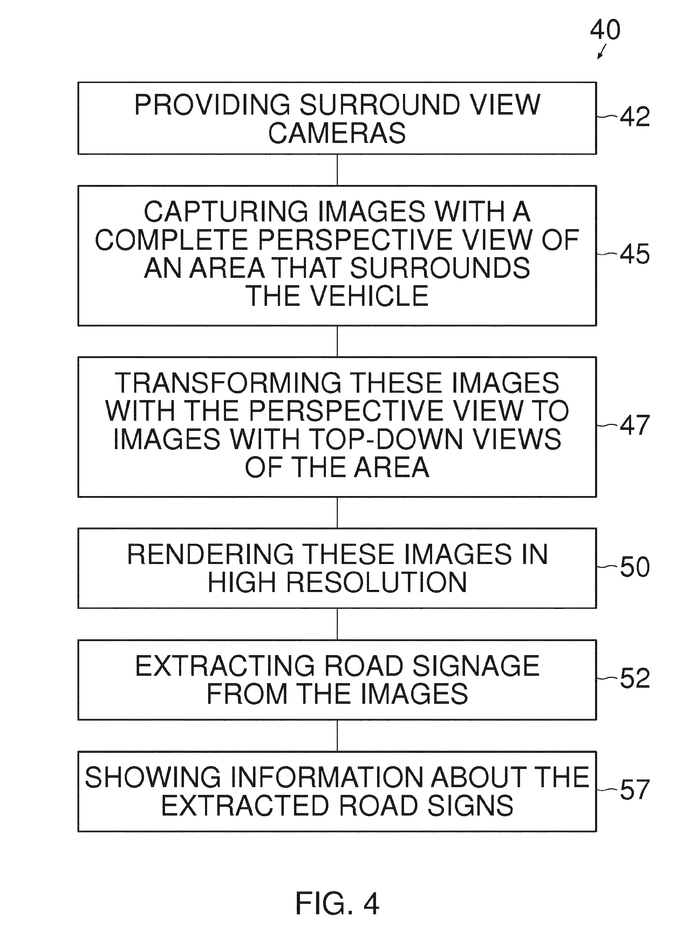

Fig. 4 shows a flow chart 40 of a method of using the surround view module 2 for detecting road signs.

The flow chart 40 includes a step 42 of providing surround view cameras 5, 6, 7, or 8 at the front, rear, left, and right parts of the vehicle 1.

These surround view cameras 5, 6, 7, or 8 then capture images 10 with a perspective view of the area that surrounds the vehicle 1, in a step 45.

After this, the processor 4 transforms these images 10 with the complete surrounding perspective view into images 11 with corresponding complete surrounding top-down view of the area, in a step 47.

The processor 4 then renders these images 11 with corresponding complete surrounding top-down views of the area in high resolution, in step 50.

The processor 4 later extracts road signage 16, 17, 19, and 24 from the images with the top-down view of the area, in a step 52.

The display afterward shows information about the extracted road signs 16, 17, 19, and 24 to a driver of the vehicle 1, in a step 57.

Although the above description contains much specificity, this should not be construed as limiting the scope of the embodiments but merely providing illustration of the foreseeable embodiments. The above stated advantages of the embodiments should not be construed especially as limiting the scope of the embodiments but merely to explain possible achievements if the described embodiments are put into practice. Thus, the scope of the embodiments should be determined by the claims and their equivalents, rather than by the examples given.

### REFERENCE NUMBERS

- 1: vehicle
- 2: surround view module
- 3: display unit
- 4: processor
- 5: front camera
- 6: driver side camera
- 7: passenger side camera
- 8: rear camera
- 10: image with a perspective view
- 11: image with a top down view
- 12: dashboard
- 14: front of vehicle
- 16: road marking
- 17: road marking
- 19: road marking
- 20: road
- 21: road marking
- 23: building
- 24: pavement
- 35: front side
- 36: driver side
- 37: passenger side
- 38: rear side
- 40: flow chart
- 42: step
- 45: step
- 47: step
- 50: step
- 52: step
- 57: step

## Claims

1. A ground signage detection module for a vehicle, the module comprising
a camera module with
- at least two cameras being provided for directing at an area on the front, at an area on the left side, at an area on the right side, and at an area on the rear of the vehicle, and
an image evaluation system is provided for
- generating at least one top-down view image from images from the at least two cameras, and
- extracting at least one road sign from the at least one top-down view image, and
a display unit for showing information of the road sign to a driver of the vehicle.

2. The ground signage detection module according to claim 1,
wherein
the at least two cameras comprise at least one front camera being provided for directing at an area on the front of the vehicle.

3. The ground signage detection module according to claim 1 or 2, wherein
the at least two cameras comprise at least one left side camera being provided for directing at an area on the left side of the vehicle.

4. The ground signage detection module according to one of the above-mentioned claims, wherein
the at least two cameras comprise at least one right side camera being provided for directing at an area on the right side of the vehicle.

5. The ground signage detection module according to one of the above-mentioned claims, wherein
the at least two cameras comprise at least one rear camera being provided for directing at an area on the rear of the vehicle.

6. The ground signage detection module according to one of the above-mentioned claims, wherein
the at least two cameras are positioned on diagonal edges of the vehicle.

7. The ground signage detection module according to claim 1,
wherein
the image evaluation system is further providing for rendering the top down view image in high resolution.

8. A vehicle with a ground signage detection module according to one of the above-mentioned claims.

9. A method of operating a vehicle with a plurality of cameras, the method comprising
providing at least one front camera, at least one left side camera, at least one right side camera, and at least one rear camera,
the cameras capturing perspective view images of at least one front area, of at least one rear area, of at least one right side area, and of at least one left side area of the vehicle,
transforming these perspective view images into at least one top down view image,
detecting at least one road sign from the at one least one top down view image, and
outputting information regarding the at least one road sign.

10. The method according to claim 9 further comprising rendering the top down view image in high resolution.

11. The method according to claim 9 or 10 further comprising using the information regarding the road sign for navigation.
